# EUROPÄISCHE PATENTSCHRIFT

(11) **EP 2 529 381 B1**
(45) Veröffentlichungstag und Bekanntmachung des Hinweises auf die Patenterteilung: **19.03.2014**
(21) Anmeldenummer: 11701113.0
(22) Anmeldetag: 25.01.2011
(51) Int. Cl.: H01G 4/38, H01G 4/30, H01G 4/12, H01C 7/04

(54) **KERAMISCHER VIELSCHICHTKONDENSATOR**
CERAMIC MULTILAYER CAPACITOR
CONDENSATEUR MULTICOUCHE EN CÉRAMIQUE

(30) Priorität: 25.05.2010 DE 102010021455; 25.01.2010 DE 102010005793
(43) Veröffentlichungstag der Anmeldung: 05.12.2012
(73) Patentinhaber: Epcos AG, 81669 München (DE)
(72) Erfinder: TESTINO, Andrea, 16122 Genoa (IT); ENGEL, Günter, A-8430 Leibnitz (AT); HOFFMANN, Christian, 3-14-1,0222 Artemisu kozu (JP)
(74) Vertreter: Epping - Hermann - Fischer
(86) Internationale Anmeldenummer: PCT/EP2011/050989
(87) Internationale Veröffentlichungsnummer: WO 2011/089269

(56) Entgegenhaltungen:
- DE-A1- 2 941 304
- US-A1- 2006 001 068

## Beschreibung

Es wird ein keramischer Vielschichtkondensator angegeben, der für Hochleistungsanwendungen geeignet ist. Der Vielschichtkondensator kann beispielsweise als Filterelement bei einem AC/DC oder DC/DC Wandler eingesetzt werden.

Es sind Polymerfilm-Kondensatoren und Keramik-Kondensatoren, beispielsweise so genannte X7R-Kondensatoren, bekannt. Weiterhin die Druckschrift US 2006/001068 einen Vielschichtkondensator mit verschiedenen Dielektrika.

Es ist eine zu lösende Aufgabe, einen Kondensator mit hoher Leistungsdichte anzugeben. Diese Aufgabe wird gelöst durch einen keramischen Vielschichtkondensator gemäß Patentanspruch 1.

Es wird ein keramischer Vielschichtkondensator mit einer ersten und einer zweiten Kondensatoreinheit angegeben, die elektrisch parallel geschaltet sind. Die erste Kondensatoreinheit weist ein erstes Material und die zweite Kondensatoreinheit weist ein zweites Material auf. Vorzugsweise unterscheidet sich das erste Material vom zweiten Material.

Beispielsweise wird der Kondensator in einem Spannungsbereich von 0 V bis 2000 V betrieben. Vorzugsweise wird der Kondensator in einem Spannungsbereich von 0 V bis 700 V betrieben.

Das erste Material weist bei niedrigen angelegten Spannungen eine große Dielektrizitätszahl auf und das zweite Material weist bei hohen angelegten Spannungen eine große Dielektrizitätszahl auf. Mit dem Begriff "niedrige Spannungen" werden vorzugsweise Spannungen bezeichnet, die im unteren Bereich des genutzten Spannungsbereichs liegen, beispielsweise im unteren Drittel des genutzten Spannungsbereichs. Beispielsweise entspricht der untere Spannungsbereich einem Feldstärkenbereich von 0 V / µm bis 3 V / µm. Mit dem Begriff "hohe Spannungen" werden vorzugsweise Spannungen bezeichnet, die im oberen Bereich des genutzten Spannungsbereichs liegen, beispielsweise im oberen Drittel des genutzten Spannungsbereichs. Der obere Spannungsbereich entspricht beispielsweise einem Feldstärkenbereich von 5 V / µm bis zur Durchbruchfeldstärke des zweiten Materials.

Mit dem Begriff "große Dielektrizitätszahl" werden, vorzugsweise Dielektrizitätszahlen über einem Wert von 500, besonders bevorzugt über einem Wert von 1000 bezeichnet.

Beispielsweise weist das erste Material im unteren Bereich des genutzten Spannungsbereichs eine Dielektrizitätszahl größer als 500, beispielsweise größer als 5000, vorzugsweise größer als 10000 auf. Beispielsweise weist das zweite Material im oberen Bereich des genutzten Spannungsbereichs eine Dielektrizitätszahl größer als 2000, vorzugsweise größer als 5000 auf.

Beispielsweise weist das erste Material bei niedrigen Spannungen ein Maximum in der Dielektrizitätszahl und das zweite Material bei hohen Spannungen ein Maximum in der Dielektrizitätszahl auf.

Vorzugsweise weist der Vielschichtkondensator aufgrund der Parallelschaltung der Kondensatoreinheiten bei hohen und bei niedrigen Spannungen eine große effektive Dielektrizitätszahl auf. Die effektive Dielektrizitätszahl kann aus der Kapazität des Vielschichtkondensators berechnet werden. Im Folgenden wird die effektive Dielektrizitätszahl des Vielschichtkondensators auch abgekürzt als Dielektrizitätszahl des Vielschichtkondensators bezeichnet.

Vorzugsweise weist ein derartiger keramischer Vielschichtkondensator aufgrund der Parallelschaltung im gesamten genutzten Spannungsbereich eine große Dielektrizitätszahl auf. Beispielsweise ist die Dielektrizitätszahl in jedem Punkt des Spannungsbereichs größer als 500, vorzugsweise größer als 5000.

Jede Kondensatoreinheit für sich kann beispielsweise nur in einem Teilbereich des genutzten Spannungsbereichs eine große Dielektrizitätszahl aufweisen. Beispielsweise nimmt bei jeder Kondensatoreinheit die Dielektrizitätszahl in Abhängigkeit von der Spannung in einem Teilbereich ein Maximum an.

Beispielsweise nimmt die Dielektrizitätszahl der ersten Kondensatoreinheit bei niedrigen Spannungen ein Maximum an und fällt bei steigender Spannung stark ab. Entsprechend nimmt vorzugsweise die Dielektrizitätszahl des ersten Materials bei niedrigen von außen erzeugten Feldstärken ein Maximum an und fällt bei steigender Feldstärke stark ab. Beispielsweise nimmt die Dielektrizitätszahl der zweiten Kondensatoreinheit bei hohen angelegten Spannungen ein Maximum an und fällt bei sinkender Spannung stark ab. Entsprechend nimmt vorzugsweise die Dielektrizitätszahl des zweiten Materials bei hohen Feldstärken ein Maximum an und fällt bei niedrigeren Feldstärken stark ab. Das zweite Material kann beispielsweise so gewählt werden, dass es eine maximale Dielektrizitätszahl für die Feldstärke aufweist, welche der maximalen Betriebsspannung entspricht.

Aufgrund der Parallelschaltung der Kondensatoreinheiten und der sich daraus ergebende Superposition der einzelnen Dielektrizitätszahlen zu einer Dielektrizitätszahl des Vielschichtkondensators können, um einen gewünschten Verlauf der Dielektrizitätszahl des gesamten Vielschichtkondensators zu erhalten, Materialien verwendet werden, bei denen die Dielektrizitätszahl stark feldstärkenabhängig ist. Hier kommen insbesondere auch besonders kostengünstige und leicht zu verarbeitende Materialien in Betracht.

In einer Ausführungsform des Kondensators ist die Spannungsabhängigkeit der Dielektrizitätszahl des Vielschichtkondensators aufgrund der Parallelschaltung der Kondensatoreinheiten kleiner als die Spannungsabhängigkeit der Dielektrizitätszahlen der einzelnen Kondensatoreinheiten. Vorzugsweise triff dies auf den gesamten genutzten Spannungsbereich, z. B. von 0 V bis 700 V, zu.

Beispielsweise weist der Vielschichtkondensator einen deutlich flacheren Verlauf der Dielektrizitätszahl als jede der Kondensatoreinheiten auf. Vorzugsweise weist der Vielschichtkondensator einen nahezu konstanten Verlauf der Dielektrizitätszahl über der Feldstärke auf. Der Kondensator weist in diesem Fall ein besonders gleichmäßiges Verhalten auf.

Beispielsweise ist das erste Material ferroelektrisch und das zweite Material anti-ferroelektrisch. Mit dem Begriff "ferroelektrisch" wird ein Material bezeichnet, das ferroelektrische Eigenschaften aufweist, und zwar vorzugsweise im genutzten Spannungsbereich. Mit dem Begriff "anti-ferroelektrisch" wird ein Material bezeichnet, das anti-ferroelektrische Eigenschaften aufweist, und zwar vorzugsweise im genutzten Spannungsbereich.

Ein anti-ferroelektrisches Material weist vorzugsweise bei niedrigen Feldstärken eine niedrige Dielektrizitätszahl auf. Bei höheren Spannungen ergibt sich ein Peak in der Dielektrizitätszahl. Ein ferroelektrisches Material weist vorzugsweise bei niedrigen bis mittleren Feldstärken ein Maximum in der Dielektrizitätszahl auf. Die Dielektrizitätszahl des ferroelektrischen Materials nimmt vorzugsweise bei steigender Feldstärke ab.

Beispielsweise wird für das erste Material eine Keramik auf der Basis von Barium-Titanat oder Blei-Titanat verwendet.

Beispielsweise wird für das zweite Material eine Keramik auf der Basis von Blei-Zirkonat-Titanat verwendet. In einer weiteren Ausführungsform wird für das zweite Material eine Keramik auf der Basis von Bismut-Natrium verwendet.

In einer Ausführungsform weist der Vielschichtkondensator wenigstens einen Temperaturregler zur Regelung der Temperatur wenigstens einer der Kondensatoreinheiten auf.

Vorzugsweise wird mittels des Temperaturreglers die Temperatur einer oder beider Kondensatoreinheiten derart eingestellt, dass das Leistungsvermögen, insbesondere die Leistungsdichte, des gesamten Kondensators möglichst groß ist.

Dies ist besonders vorteilhaft, wenn eine oder beide Materialien einen stark temperaturabhängigen Verlauf der Dielektrizitätszahl aufweisen. Beispielsweise weist die Dielektrizitätszahl über der Temperatur eines oder beider Materialien ein schmalbandiges Maximum auf. Die Breite des Maximums liegt beispielsweise zwischen 5 K und 20 K.

Vorzugsweise stellt der Temperaturregler in diesem Fall die Temperatur des Materials auf einen Wert ein, bei dem das Material eine Dielektrizitätszahl aufweist, die in der Nähe des Maximums der Dielektrizitätszahl, vorzugsweise an der Flanke des Maximums, liegt. In diesem Fall kann die Dielektrizitätszahl auf einem kontrollierten Wert gehalten werden, so dass eine erhöhte Betriebssicherheit des Kondensators erreicht wird.

In einer Ausführungsform weist das zweite Material eine maximale Dielektrizitätszahl bei derjenigen Feldstärke auf, welche der maximalen Betriebsspannung des Vielschichtkondensators entspricht.

Vorzugsweise ist der Temperaturregler als Kaltleiter ausgebildet.

Insbesondere kann hierfür eine PTC-Keramik (PTC für *positive temperature coefficient -* positiver Temperaturkoeffizient) eingesetzt werden.

Durch die Verwendung eines keramischen Materials kann der Temperaturregler platzsparend in den keramischen Kondensator integriert werden, so dass eine Miniaturisierung und eine Steigerung der Leistungsdichte des Kondensators erreicht werden kann. Vorzugsweise ist das für den Temperaturregler benötigte Volumen sehr klein.

Beispielsweise wird für das erste Material eine stark temperaturabhängige Keramik, für das zweite Material eine stark feldstärkenabhängige Keramik und für den Temperaturregler eine PTC-Keramik verwendet.

Der Temperaturregler ist vorzugsweise selbstregelnd, so dass sich bei einer eingestellten Betriebsspannung eine gewünschte Temperatur, die Einregel-Temperatur, einstellt. Vorzugsweise wird diese Temperatur durch den Temperaturregler konstant gehalten.

In einer Ausführungsform ist der Temperaturregler zur Einstellung der Temperatur wenigstens eines der Materialien auf einen Wert vorgesehen, bei dem die Dielektrizitätszahl des Materials möglichst groß ist. Beispielsweise nimmt die Dielektrizitätszahl des Materials bei der eingestellten Temperatur einen Wert in der Nähe eines Maximums der Dielektrizitätszahl an.

Beispielsweise ist der Temperaturregler zur Einstellung der Temperatur des ersten Materials auf einen Wert vorgesehen, bei dem die Dielektrizitätszahl des ersten Materials möglichst groß ist. Beispielsweise liegt die Dielektrizitätszahl des Materials in der Nähe eines Maximums im genutzten Spannungsbereich. Beispielsweise liegt die eingestellte Temperatur im Bereich der Curie-Temperatur des ersten Materials. Das zweite Material kann in diesem Temperaturbereich beispielsweise eine Dielektrizitätszahl aufweisen, die in der Nähe eines Maximums der Dielektrizitätszahl liegt. In einer Ausführungsform ist das Maximum in der Dielektrizitätszahl des zweiten Materials bei der eingestellten Temperatur überschritten.

In einer weiteren Ausführungsform ist der Temperaturregler zur Einstellung der Temperatur des zweiten Materials auf einen Wert vorgesehen, bei dem die Dielektrizitätszahl des zweiten Materials möglichst groß ist. Beispielsweise nimmt die Dielektrizitätszahl des zweiten Materials bei der eingestellten Temperatur einen Wert in der Nähe eines Maximums der Dielektrizitätszahl an.

Die Temperatur kann auch so eingestellt werden, dass sich ein Maximum in der Dielektrizitätszahl des gesamten Vielschichtkondensators oder ein Optimum aus Dielektrizitätszahl und Verlustwinkel ergibt.

In einer weiteren Ausführungsform werden ein erster Temperaturregler zur Einstellung der Temperatur des ersten Materials und ein zweiter Temperaturregler zur Einstellung der Temperatur des zweiten Materials verwendet.

Insbesondere können der erste und der zweite Temperaturregler voneinander entkoppelt sein, so dass die Temperatur des ersten Materials und des zweiten Materials unterschiedlich ist. Vorzugsweise werden die Temperaturen des ersten und des zweiten Materials so eingestellt, dass die Dielektrizitätszahlen sowohl des ersten und als auch des zweiten Materials möglichst groß sind. Beispielsweise liegen die Dielektrizitätszahlen beider Materialien bei den eingestellten Temperaturen im genutzten Spannungsbereich in der Nähe eines jeweiligen Maximums der Dielektrizitätszahl.

In einer Ausführungsform weist der Vielschichtkondensator einen Überspannungsschutz auf, der elektrisch parallel zu den Kondensatoreinheiten geschaltet ist.

Bei wechselnder Spannung kommt es wegen der Parallelschaltung zwischen der ersten und der zweiten Kondensatoreinheit zu Umladungen zwischen den Kondensatoreinheiten. Der Überspannungsschutz dient dazu, Spannungsspitzen abzubauen. Beispielsweise ist der Überspannungsschutz als Varistor ausgebildet.

Alternativ oder zusätzlich dazu weist der Vielschichtkondensator in einer Ausführungsform einen Überstromschutz auf, um Stromspitzen abzubauen. Beispielsweise ist der Überstromschutz als PTC-Element ausgebildet.

Alternativ oder zusätzlich zu einem Überstromschutz oder einem Überspannungsschutz weist der Vielschichtkondensator in einer Ausführungsform eine Induktivität auf, die elektrisch in Serie zur ersten und zweiten Kondensatoreinheit geschaltet ist. Die Induktivität kann bei wechselnder Betriebsspannung zur zeitlichen Steuerung der Umladungen zwischen den Kondensatoren dienen.

In weiteren Ausführungsformen kann der Kondensator mehr als zwei Kondensatoreinheiten aufweisen. Beispielsweise weist der Kondensator mehrere erste Kondensatoreinheiten, enthaltend das erste Material, und mehrere zweite Kondensatoreinheiten, enthaltend das zweite Material, auf. Der Kondensator kann auch weitere parallel geschaltete Kondensatoreinheiten mit weiteren Materialien aufweisen, die sich vom ersten und vom zweiten Material unterscheiden.

Im Folgenden werden einige mögliche Zusammensetzungen für erste und zweite Materialien angegeben. Insbesondere können bei dem angegebenen Vielschichtkondensator aufgrund der Parallelschaltung der Kondensatoreinheiten auch Materialien verwendet werden, die bei sonst üblichen Kondensatoren aufgrund ihrer starken Temperatur- oder Feldstärkenabhängigkeit der Dielektrizitätszahlen nicht verwendet werden können.

Beispielsweise weist das erste Material eine der folgenden Zusammensetzungen auf:
a) (1-x) BaTiO₃ + x BaZrO₃ mit 0 < x < 0,25,
b) Ba₁₋ₓSrₓTi_{1-y}Zr_{y}O₃ mit 0 < x < 1 und 0 <= y < 1,
c) Pb₁₋ₓSrₓTi_{1-y}Zr_{y}O₃ mit 0 < x < 1 und 0 <= y < 1,
d) Ba₁₋ₓCaₓTi_{1-y}Zr_{y}O₃ mit 0 < x < 1 und 0 <= y < 1.

Beispielsweise weist das zweite Material eine der folgenden Zusammensetzungen auf:
e) Pb_{1-1,5y}La_{y}Ti_{1-z}Zr_{z}O₃ mit 0 < y < 0,15 und 0,6 < z < 1,
f) Pb_{1-1,5y}Nd_{y}Ti_{1-z}Zr_{z}O₃ mit 0 < y < 0,15 und 0,6 < z < 1,
g) (1-x) PLZT + x PNZT, mit 0 < x < 1, wobei PLZT ein Material der Zusammensetzung e) und PNZT ein Material der Zusammensetzung f) bezeichnet,
h) Bi_{0,5}Na_{0,5}TiO₃,
i) (1-x) BNT + x BT mit 0 < x < 0,35, wobei BNT ein Material der Zusammensetzung h) und BT ein Material der Zusammensetzung BaTiO₃ bezeichnet,
k) (1-x) BNT + x PT mit 0 < x < 0,35, wobei BNT ein Material der Zusammensetzung h) und PT ein Material der Zusammensetzung PbTiO₃ bezeichnet.

Im Folgenden wird das angegebene Bauelement anhand von schematischen und nicht maßstabsgetreuen Figuren erläutert.

Es zeigen:
- Figur 1: in schematischer Darstellung ein erstes Ausführungsbeispiel des Vielschichtkondensators,
- Figur 2A: die Feldstärkenabhängigkeit der Dielektrizitätszahl eines ersten Materials,
- Figur 2B: die Feldstärkenabhängigkeit der Dielektrizitätszahl eines zweiten Materials,
- Figur 2C: die Feldstärkenabhängigkeit der effektiven Dielektrizitätszahl eines Kondensators, der eine erste Kondensatoreinheit mit einem ersten Material und eine zweite Kondensatoreinheit mit einem zweiten Material aufweist,
- Figur 3A: die Polarisationskurve eines anti-ferroelektrischen Materials,
- Figur 3B: die Dielektrizitätszahl in Abhängigkeit vom elektrischen Feld des anti-ferroelektrischen Materials aus Figur 3A,
- Figur 4: die Polarisationskurve eines weiteren anti-ferroelektrischen Materials,
- Figur 5: ein Ausführungsbeispiel für die elektrische Verschaltung der Kondensatoreinheiten mit einer Induktivität und einem Überspannungsschutz,
- Figur 6A: ein erstes Ausführungsbeispiel für einen Vielschichtkondensator in einer ersten Seitenansicht,
- Figur 6B: der Vielschichtkondensator aus Figur 6A in einer zweiten Seitenansicht,
- Figur 6C: ein Ausschnitt aus dem Vielschichtkondensator aus den Figuren 6A und 6B ein einer Schnittansicht,
- Figur 7A: ein zweites Ausführungsbeispiel für einen Vielschichtkondensator in einer ersten Seitenansicht,
- Figur 7B: der Vielschichtkondensator aus Figur 7A in einer zweiten Seitenansicht.

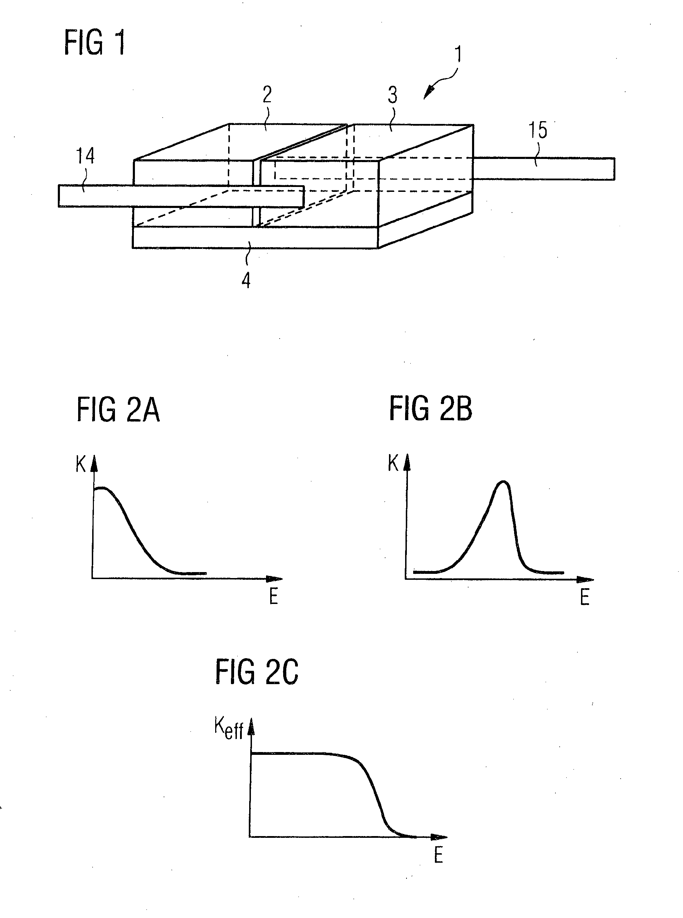

Figur 1 zeigt einen schematischen Aufbau eines keramischen Vielschichtkondensators 1. Der Vielschichtkondensator 1 weist eine erste Kondensatoreinheit 2 und eine zweite Kondensatoreinheit 3 auf, die mittels elektrischer Anschlüsse 14, 15 parallel verschaltet sind.

Die erste Kondensatoreinheit 2 weist ein erstes keramisches Material auf, das bei niedrigen angelegten Spannungen eine große Dielektrizitätszahl aufweist. Die zweite Kondensatoreinheit 3 weist ein zweites keramisches Material auf, das bei hohen angelegten Spannungen eine große Dielektrizitätszahl aufweist. Aufgrund der Parallelschaltung der ersten 2 und der zweiten 3 Kondensatoreinheit ergibt sich für den gesamten Vielschichtkondensator eine Dielektrizitätszahl, die sowohl bei hohen als auch bei niedrigen Spannungen groß ist.

Beide Kondensatoreinheiten 2, 3 weisen einen Vielschichtaufbau aus keramischen Schichten und dazwischen liegenden Elektrodenschichten (hier nicht dargestellt) auf. Als erstes beziehungsweise zweites Material wird jeweils das Material der keramischen Schichten in der entsprechenden Vielschichteinheit 2, 3 bezeichnet. Beispielsweise ist das erste Material eine ferroelektrische Keramik auf Basis von Barium-Titanat oder Blei-Titanat. Das zweite Material ist beispielsweise eine anti-ferroelektrische Keramik auf Basis von Blei-Zirkonat-Titanat. Alternativ dazu sind auch bleifreie Anti-Ferroelektrika auf BiNaTi₂O₆-Basis oder deren Festphasenlösungen mit BaTiO₃ oder PbTiO₃ möglich. Die Keramiken können auch Sinterzusätze, wie z. B. Bor- oder Li-Gläser aufweisen. Die Elektrodenschichten weisen beispielsweise eines oder mehrere der Metalle Ni, Cu, Ag, AgPd oder Pd auf. Insbesondere ist auch eine Verwendung von unedlen Metallen möglich.

Die erste 2 und die zweite Kondensatoreinheit 3 sind mit einem Temperaturregler 4 thermisch leitend verbunden, der als selbstregelndes PTC-Element ausgebildet ist. Durch den Temperaturregler wird die Temperatur der Kondensatoreinheiten 2, 3 so eingestellt, dass das Leistungsvermögen des gesamten Vielschichtkondensators 1 möglichst hoch ist. Beispielsweise wird die Temperatur so eingestellt, dass das ferroelektrische Material bei dieser Temperatur einen Wert in der Nähe eines Maximums der Dielektrizitätszahl aufweist. Dies ist insbesondere bei einem stark temperaturabhängigen Verlauf der Dielektrizitätszahl des Materials von Vorteil. Bei einem ferroelektrischen Material mit der Zusammensetzung Ba(Ti,Zr)O₃ wird beispielsweise die Temperatur auf 80 °C eingestellt.

Anstelle eines einzigen Temperaturreglers 4 können auch ein erster Temperaturregler und ein zweiter Temperaturregler verwendet werden, die voneinander entkoppelt sind. Der erste Temperaturregler kann zur Einstellung der Temperatur des ersten Materials und der zweite Temperaturregler zur Einstellung der Temperatur des zweiten Materials auf Werte vorgesehen sein, bei denen die Dielektrizitätszahlen der Materialien möglichst groß sind.

Die erste Kondensatoreinheit 2 ist mit der zweiten Kondensatoreinheit 3 mechanisch mittels der elektrischen Anschlüsse 14, 15 verbunden. Die erste 2 und die zweite Kondensatoreinheit 3 können auch an einem gemeinsamen Chassis befestigt sein.

Figur 2A zeigt die Feldstärkenabhängigkeit der Dielektrizitätszahl K in Abhängigkeit von der Feldstärke E für ein erstes Materials, z. B. ein ferroelektrisches Material, das in der ersten Kondensatoreinheit 3 aus Figur 1 eingesetzt werden kann. Bei niedrigen Spannungen ist die Dielektrizitätszahl groß, vorzugsweise deutlich über einem Wert von 500, besonders bevorzugt deutlich über einem Wert von 1000. Bei hohen Spannungen sinkt die Dielektrizitätszahl stark ab.

Figur 2B zeigt den Verlauf der Dielektrizitätszahl K eines zweiten Materials in Abhängigkeit von der Feldstärke E. Beispielsweise ist das zweite Material ein anti-ferroelektrisches Material, das in der zweiten Kondensatoreinheit 3 aus Figur 1 eingesetzt werden kann. Das zweite Material weist bei hohen angelegten Feldstärken ein Maximum in der Dielektrizitätszahl auf. Vorzugsweise ist die maximale Dielektrizitätszahl deutlich größer als 500 und vorzugsweise deutlich größer als 1000. Bei niedrigeren Feldstärken ist die Dielektrizitätszahl wesentlich geringer. Die Dielektrizitätszahl des zweiten Materials ist somit stark feldstärkenabhängig.

Figur 2C zeigt die Feldstärkenabhängigkeit der effektiven Dielektrizitätszahl K_{eff} eines Vielschichtkondensators, der eine Kondensatoreinheit mit dem ersten Material aus Figur 2A und eine zweite Kondensatoreinheit mit dem zweiten Material aus Figur 2B aufweist. Die Dielektrizitätszahl ergibt sich aufgrund der Parallelschaltung der Kondensatoreinheiten 2, 3 aus einer Superposition der Dielektrizitätszahlen aus Figuren 2A und 2B. Die Dielektrizitätszahl des Vielschichtkondensators liegt in einem großen Spannungsbereich bei einem hohen Wert, vorzugsweise bei einem Wert deutlich über 500, besonders bevorzugt bei einem Wert deutlich über 1000. Zudem weist die Dielektrizitätszahl über einen großen Spannungsbereich einen flachen Verlauf und somit eine geringe Feldstärkenabhängigkeit auf.

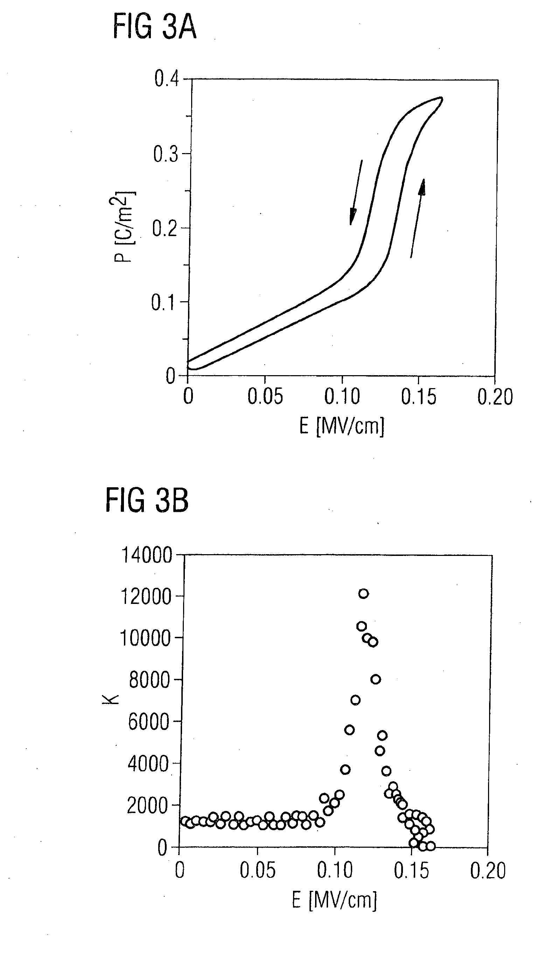

Figur 3A zeigt die Polarisationskurve eines anti-ferroelektrischen Materials, das in einem Vielschichtkondensator als zweites Material eingesetzt werden kann. Die Polarisation P bei ansteigender Feldstärke E ist durch einen Pfeil nach oben und bei absinkender Feldstärke E durch einen Pfeil nach unten gekennzeichnet. Das anti-ferroelektrische Material basiert beispielsweise auf PbZrO₃.

Figur 3B zeigt die aus Figur 3A abgeleiten Dielektrizitätszahlen K in Abhängigkeit von der Feldstärke E. Die Dielektrizitätszahlen K liegen in einem Feldstärkenbereich um 0,12 MV/cm bei 12000. Dies entspricht beispielsweise bei einer Schichtstärke der keramischen Schichten von 20 µm bis 80 µm einer Betriebsspannung zwischen 240 V und 960 V.

Vorzugsweise weist der gesamte Kondensator in einem großen Feldstärkenbereich eine ähnlich hohe Dielektrizitätszahl auf. Beispielsweise wird der Kondensator bei einer Spannung von bis zu 500 V betrieben.

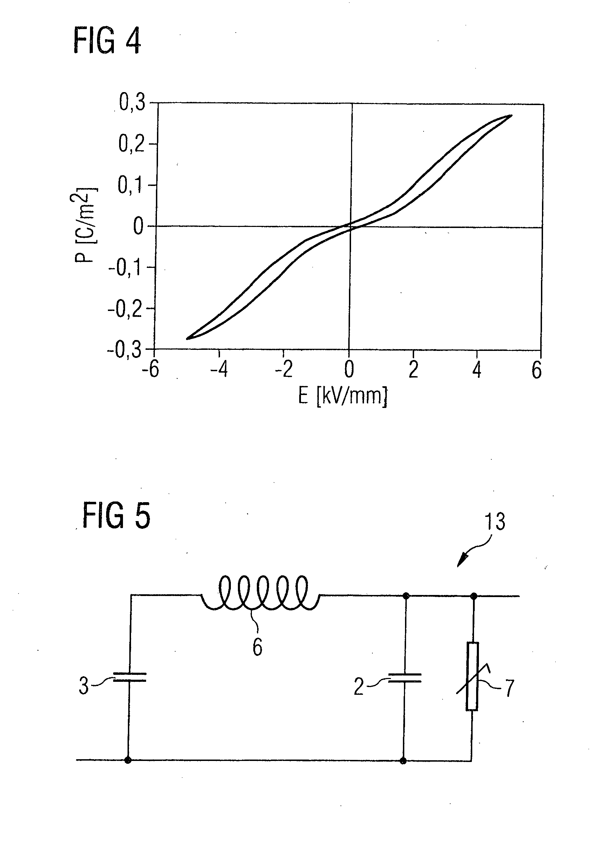

Figur 4 zeigt die Polarisationskurve eines weiteren Materials, basierend auf BiNaTi₂O₆, das als zweites Material für einen Vielschichtkondensator verwendet werden kann. Die Polarisationskurve weist einen flacheren Verlauf auf als die Polarisationskurve des Materials aus Figur 3A. In diesem Fall ist die maximale Dielektrizitätszahl geringer als die in Figur 3B gezeigte maximale Dielektrizitätszahl und weist eine geringere Feldstärkenabhängigkeit auf.

Ähnliche Polarisationskurven ergeben sich aus Isotypen-Substitution, wie BiMgTi₂O₆ sowie bei Keramiken mit Bi-Unterschuss. Zur Stabilisierung der Elektronegativitäten können die Keramiken beispielsweise zusätzlich mit Nd oder La dotiert sein. Mit Festphasen-Mischungen zwischen derartigen Materialien mit PbTiO₃ BaTiO₃ PbZrO₃ oder BaZrO₃ oder Kombinationen daraus sind auch dazwischen liegende Verläufe möglich.

Figur 5 zeigt schematisch ein Schaltbild 13 eines Vielschichtkondensators 1, der eine erste Kondensatoreinheit 2 und eine zweite Kondensatoreinheit 3 aufweist, die elektrisch parallel verschaltet sind.

Aufgrund der Parallelschaltung der Kondensatoreinheiten 2, 3 treten bei wechselnder Betriebsspannung Umladungen auf. Zur zeitlichen Steuerung ist deshalb zwischen der ersten 2 und der zweiten 3 Kondensatoreinheit eine Induktivität 6 in Serie geschaltet. Zum Schutz vor Überspannungen ist ein als Varistor ausgebildeter Überspannungsschutz 7 elektrisch parallel zu den Kondensatoreinheiten 2, 3 geschaltet. Anstelle eines Varistors kann auch ein anderes Bauelement eingesetzt werden, das in der Lage ist, auftretende Spannungsspitzen schnell abzubauen.

Der Überspannungsschutz 7 und die Induktivität 6 können beispielsweise über eine geeignete Verbindungstechnologie extern beschaltet sein oder zusammen in einem Modul verbaut sein.

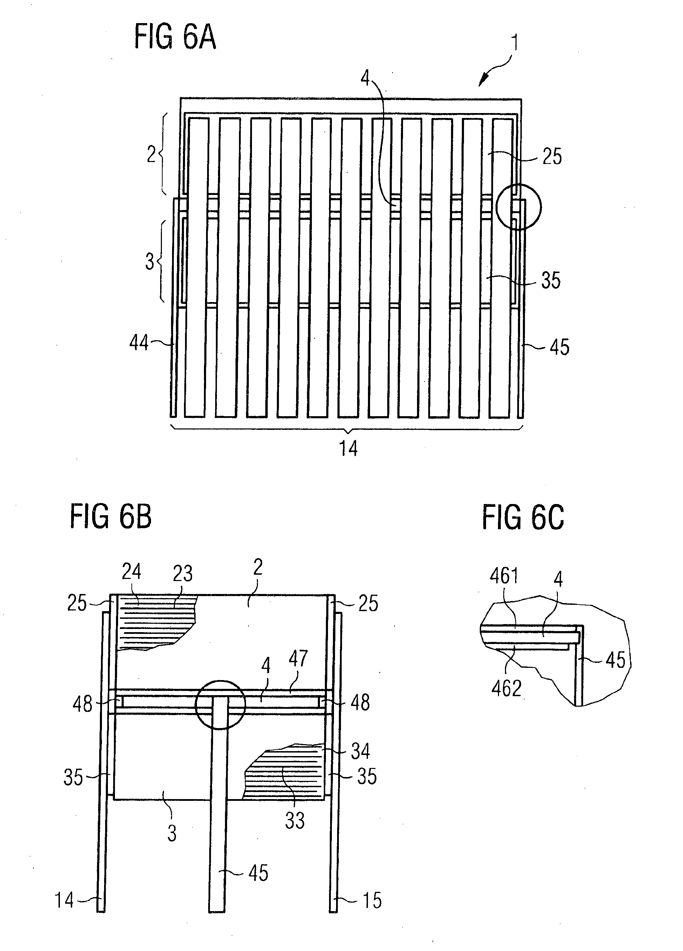

Figur 6A zeigt eine Seitenansicht eines ersten Ausführungsbeispiels eines Vielschichtkondensators 1. Der Vielschichtkondensator weist eine erste Kondensatoreinheit 2 und eine zweite Kondensatoreinheit 3 auf, die mittels elektrischer Anschlüsse 14, 15 parallel verschaltet sind. Zwischen der ersten Kondensatoreinheit 2 und der zweiten Kondensatoreinheit 3 ist ein Temperaturregler 4 in Form eines selbstregulierenden PTC-Heizelements angeordnet.

Der Vielschichtkondensator 1 weist beispielsweise bei einer Anwendungsspannung von 400 V eine Leistungsdichte von wenigstens 5 µF / cm³, vorzugsweise von wenigstens 10 µF / cm³ auf.

Figur 6B zeigt den Vielschichtkondensator 1 aus Figur 6A um 90° um die vertikale Achse gedreht. Hier ist der Schichtaufbau der Kondensatoreinheiten 2, 3 angedeutet. Jede der Kondensatoreinheiten 2, 3 weist eine Anzahl von keramischen Schichten 24, 34 und dazwischen liegende Elektrodenschichten 23, 33 auf. Die keramischen Schichten 24, 34 weisen jeweils das erste beziehungsweise das zweite Material auf. Die Kondensatoreinheiten 2, 3 weisen flächige Außenelektroden 25, 35 auf, durch die die Elektrodenschichten 23, 33 elektrisch mit den Anschlüssen 14, 15 verbunden sind. Beispielsweise sind die Anschlüsse 14, 15 mittels eines Lotmaterials, eines Leitklebers oder mittels Drahtbondens an den Außenelektroden 25, 35 befestigt. Die Außenelektroden 25, 35 können beispielsweise als Einbrandpaste ausgebildet sein. In weiteren Ausführungsformen können die Anschlüsse auch direkt mit den Elektrodenschichten 23, 33 verbunden sein, so dass in diesem Fall keine Außenelektroden 25, 35 vorgesehen sind.

Der Temperaturregler 4 ist thermisch mit der ersten 2 und der zweiten Kondensatoreinheit 3 gekoppelt, sodass er die Temperatur beider Kondensatoreinheiten 2, 3 auf einen gewünschten Wert einstellen kann. Der Temperaturregler 4 ist an der ersten 2 und der zweiten Kondensatoreinheit 3 jeweils mittels eines wärmeleitenden Haftmittels 47 befestigt. Von den Außenseiten der Kondensatoreinheiten 2, 3 ist der Temperaturregler 4 durch Zwischenräume 48 elektrisch isoliert.

Figur 6C zeigt einen Ausschnitt aus dem Vielschichtkondensator 1, dessen Lage in den Figuren 6A und 6B durch Kreise angezeigt ist. Der Ausschnitt ist in einer seitlichen Aufsicht entsprechend der Aufsicht in Figur 6A gezeigt. Hier ist der elektrische Anschluss 45 des Temperaturreglers 4 zu sehen. Der Temperaturregler 4 weist zwei Elektrodenschichten 461, 462 auf, wobei eine Elektrodenschicht 461 mit einem der Anschlüsse 45 und die andere Elektrodenschicht mit dem dazu gegenüberliegenden Anschluss 44 elektrisch verbunden ist. Eine der Elektrodenschichten 461 ist bis zum Anschluss 45 geführt, die andere Elektrodenschicht 462 ist von diesem Anschluss 45 beabstandet und bis zum Anschluss 44 geführt.

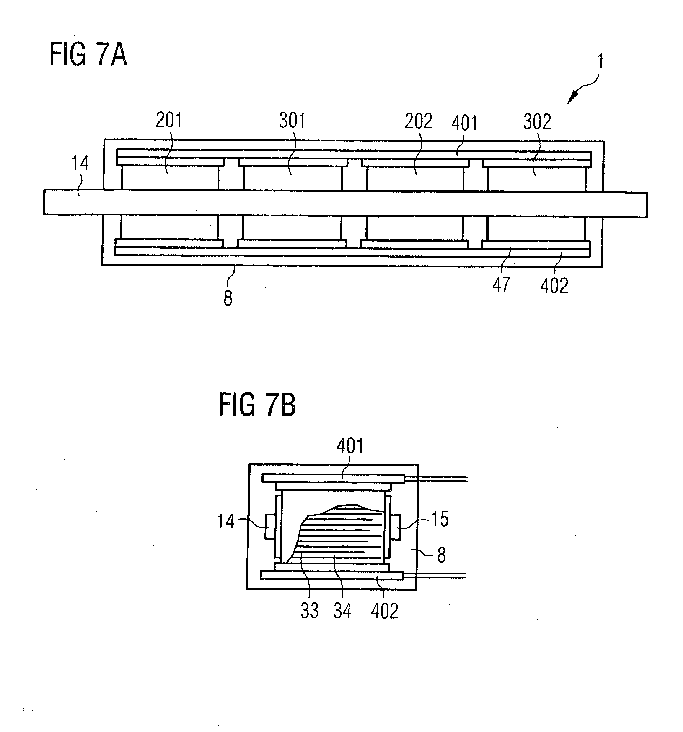

Figur 7A zeigt ein zweites Ausführungsbeispiel eines Vielschichtkondensators 1, bei dem mehrere erste Kondensatoreinheiten 201, 202 und mehrere zweite Kondensatoreinheiten 301, 302 in abwechselnder Reihenfolge nebeneinander angeordnet sind. Die Kondensatoreinheiten 201, 202, 301, 302 weisen eine gemeinsame thermische Umhüllung 8 auf.

Figur 7B zeigt den Vielschichtkondensator aus Figur 7A in einer um 90° um die vertikale Achse gedrehten Ansicht. Hier ist, wie in Figur 6B, der Vielschichtaufbau jeder der Kondensatoreinheiten 201, 202, 301, 302 angedeutet.

Der Vielschichtkondensator weist zwei Temperaturregler 401, 402 auf, wobei ein Temperaturregler 401 oberhalb der Kondensatoreinheiten 201, 202, 301, 302 und der zweite Temperaturregler 402 unterhalb der Kondensatoreinheiten 201, 202, 301, 302 angeordnet ist. Die Temperaturregler 401, 402 weisen dieselbe Einregeltemperatur auf. Auf diese Weise kann eine besonders zuverlässige Einstellung der Temperatur erreicht werden.

### Bezugszeichenliste

1 Vielschichtkondensator
13 schematisches Schaltbild
14, 15 elektrischer Anschluss

2, 201, 202 erste Kondensatoreinheit
23 Elektrodenschicht
24 keramische Schicht des ersten Materials
25 Außenelektrode

3, 301, 302 zweite Kondensatoreinheit

33 Elektrodenschicht
34 keramische Schicht des zweiten Materials
35 Außenelektrode

4, 401, 402 Temperaturregler
43 Kaltleitermaterial
44, 45 elektrischer Anschluss
461, 462 Elektrodenschicht
47 wärmeleitendes Haftmittel
48 Zwischenraum

6 Induktivität
7 Überspannungsschutz
8 Umhüllung

E Elektrische Feldstärke
K Dielektrizitätszahl
K_{eff} effektive Dielektrizitätszahl

## Patentansprüche

1. Keramischer Vielschichtkondensator
mit einer ersten Kondensatoreinheit (2, 201, 202), die ein erstes Material aufweist, und mit einer zweiten Kondensatoreinheit (3, 301, 302), die ein zweites Material aufweist, wobei sich das erste Material vom zweiten Material unterscheidet, wobei die erste (2, 201, 202) und die zweite Kondensatoreinheit (3, 301, 302) elektrisch parallel geschaltet sind und wobei das erste Material bei einer ersten Spannung ein Maximum in der Dielektrizitätszahl (K) aufweist und das zweite Material bei einer zweiten Spannung ein Maximum in der Dielektrizitätszahl (K) aufweist, wobei die erste Spannung niedriger ist als die zweite Spannung.

2. Vielschichtkondensator nach Anspruch 1,
bei dem die Dielektrizitätszahl (K) des Vielschichtkondensators (1) in einem Spannungsbereich von 0 V bis 700 V größer als 500 ist.

3. Vielschichtkondensator nach einem der Ansprüche 1 oder 2,
bei dem in einem Spannungsbereich von 0 V bis 700 V die Spannungsabhängigkeit der Dielektrizitätszahl (K) des Vielschichtkondensators (1) aufgrund der Parallelschaltung der Kondensatoreinheiten (2, 201, 202, 3, 301, 302) kleiner ist als die Spannungsabhängigkeit der Dielektrizitätszahl (K) der einzelnen Kondensatoreinheiten (2, 3).

4. Vielschichtkondensator nach einem der Ansprüche 1 bis 3,
bei dem das erste Material ferroelektrische Eigenschaften und das zweite Material anti-ferroelektrische Eigenschaften aufweist.

5. Vielschichtkondensator nach einem der Ansprüche 1 bis 4,
mit wenigstens einem Temperaturregler (4, 401, 402) zur Regelung der Temperatur wenigstens einer der Kondensatoreinheiten (2, 201, 202, 3, 301, 302).

6. Vielschichtkondensator nach Anspruch 5,
bei dem der Temperaturregler (4, 401, 402) als Kaltleiter ausgebildet ist.

7. Vielschichtkondensator nach einem der Ansprüche 5 oder 6,
bei dem der Temperaturregler (4, 401, 402) zur Einstellung der Temperatur wenigstens eines der Materialien auf einen Wert vorgesehen ist, bei dem die Dielektrizitätszahl (K) des Materials in der Nähe eines Maximums im genutzten Spannungsbereich liegt.

8. Vielschichtkondensator nach einem der Ansprüche 5 bis 7,
mit einem ersten Temperaturregler (4, 401, 402) zur Einstellung der Temperatur des ersten Materials und mit einem zweiten Temperaturregler (4, 401, 402) zur Einstellung der Temperatur des zweiten Materials.

9. Vielschichtkondensator nach Anspruch 8,
bei dem der erste Temperaturregler (4, 401, 402) zur Einstellung der Temperatur des ersten Materials auf einen Wert vorgesehen ist, bei dem die Dielektrizitätszahl (K) des ersten Materials in der Nähe eines Maximums im genutzten Spannungsbereich liegt, und bei dem der zweite Temperaturregler (4, 401, 402) zur Einstellung der Temperatur des zweiten Materials auf einen Wert vorgesehen ist, bei dem die Dielektrizitätszahl (K) des zweiten Materials in der Nähe eines Maximums im genutzten Spannungsbereich liegt.

10. Vielschichtkondensator nach einem der Ansprüche 1 bis 9, bei dem das erste Material eine Keramik auf Barium-Titanat Basis oder Blei-Titanat Basis ist.

11. Vielschichtkondensator nach einem der Ansprüche 1 bis 10, bei dem das zweite Material eine Keramik auf Blei-Zirkonat-Titanat Basis oder Bismut-Natrium Basis ist.

12. Vielschichtkondensator nach einem der Ansprüche 1 bis 11, bei dem das erste Material eine der folgenden Zusammensetzungen aufweist:
a) (1-x) BaTiO₃ + x BaZrO₃ mit 0 < x < 0,25,
b) Ba₁₋ₓSrₓTi_{1-y}Zr_{y}O₃ mit 0 < x < 1 und 0 <= y < 1,
c) Pb₁₋ₓSrₓTi_{1-y}Zr_{y}O₃ mit 0 < x < 1 und 0 <= y < 1,
d) Ba₁₋ₓCaₓTi_{1-y}Zr_{y}O₃ mit 0 < x < 1 und 0 <= y < 1.

13. Vielschichtkondensator nach einem der Ansprüche 1 bis 12, bei dem das zweite Material eine der folgenden Zusammensetzungen aufweist:
e) Pb_{1-1,5y}La_{y}Ti_{1-z}Zr_{z}O₃ mit 0 < y < 0,15 und 0,6 < z < 1,
f) Pb_{1-1,5y}Nd_{y}Ti_{1-z}Zr_{z}O₃ mit 0 < y < 0,15 und 0,6 < z < 1,
g) (1-x) PLZT + x PNZT, mit 0 < x < 1, wobei PLZT ein Material der Zusammensetzung e) und PNZT ein Material der Zusammensetzung f) bezeichnet,
h) Bi_{0,5}Na_{0,5}TiO₃,
i) (1-x) BNT + x BT mit 0 < x < 0,35, wobei BNT ein Material der Zusammensetzung h) und BT ein Material der Zusammensetzung BaTiO₃ bezeichnet,
k) (1-x) BNT + x PT mit 0 < x < 0,35, wobei BNT ein Material der Zusammensetzung h) und PT ein Material der Zusammensetzung PbTiO₃ bezeichnet.

14. Vielschichtkondensator nach einem der Ansprüche 1 bis 13, mit einem Überspannungsschutz (7), der elektrisch parallel zu den Kondensatoreinheiten (2, 201, 202, 3, 301, 302) geschaltet ist.

15. Vielschichtkondensator nach einem der Ansprüche 1 bis 14, mit einer Induktivität, die elektrisch in Serie zwischen der ersten (2, 201, 202) und der zweiten Kondensatoreinheit (3, 301, 302) geschaltet ist.

## Claims

1. Ceramic multilayer capacitor
comprising a first capacitor unit (2, 201, 202), which comprises a first material, and comprising a second capacitor unit (3, 301, 302), which comprises a second material, wherein the first material differs from the second material, wherein the first (2, 201, 202) and the second capacitor unit (3, 301, 302) are electrically connected in parallel, and wherein the first material has a maximum in the dielectric constant (K) at a first voltage and the second material has a maximum in the dielectric constant (K) at a second voltages, wherein the first voltage is lower than the second voltage.

2. Multilayer capacitor according to Claim 1,
wherein the dielectric constant (K) of the multilayer capacitor (1) is greater than 500 in a voltage range of 0 V to 700 V.

3. Multilayer capacitor according to either of Claims 1 and 2,
wherein, in a voltage range of 0 V to 700 V, the voltage dependence of the dielectric constant (K) of the multilayer capacitor (1) is less than the voltage dependence of the dielectric constant (K) of the individual capacitor units (2, 3) on account of the parallel connection of the capacitor units (2, 201, 202, 3, 301, 302).

4. Multilayer capacitor according to any of Claims 1 to 3, wherein the first material has ferroelectric properties and the second material has anti-ferroelectric properties.

5. Multilayer capacitor according to any of Claims 1 to 4, comprising at least one temperature regulator (4, 401, 402) for regulating the temperature of at least one of the capacitor units (2, 201, 202, 3, 301, 302).

6. Multilayer capacitor according to claim 5,
wherein the temperature regulator (4, 401, 402) is embodied as a PTC thermistor.

7. Multilayer capacitor according to either of Claims 5 and 6,
wherein the temperature regulator (4, 401, 402) is provided for setting the temperature of at least one of the materials to a value at which the dielectric constant (K) of the material is in the vicinity of a maximum in the voltage range used.

8. Multilayer capacitor according to any of Claims 5 to 7, comprising a first temperature regulator (4, 401, 402) for setting the temperature of the first material and comprising a second temperature regulator (4, 401, 402) for setting the temperature of the second material.

9. Multilayer capacitor according to Claim 8,
wherein the first temperature regulator (4, 401, 402) is provided for setting the temperature of the first material to a value at which the dielectric constant (K) of the first material is in the vicinity of a maximum in the voltage range used, and wherein the second temperature regulator (4, 401, 402) is provided for setting the temperature of the second material to a value at which the dielectric constant (K) of the second material is in the vicinity of a maximum in the voltage range used.

10. Multilayer capacitor according to any of Claims 1 to 9, wherein the first material is a ceramic based on barium titanate or based on lead titanate.

11. Multilayer capacitor according to any of Claims 1 to 10, wherein the second material is a ceramic based on lead zirconate titanate or based on bismuth-sodium.

12. Multilayer capacitor according to any of Claims 1 to 11, wherein the first material has one of the following compositions:
a) (1-x) BaTiO₃ + x BaZrO₃ where 0 < x < 0.25,
b) Ba₁₋ₓSrₓTi₁-_{y}Zr_{y}O₃ where 0 < x < 1 and 0 ≤ y < 1,
c) Pb₁₋ₓSrₓTi_{1-y}Zr_{y}O₃ where 0 < x < 1 and 0 ≤ y < 1,
d) Ba₁₋ₓcaₓTi₁-_{y}Zr_{y}O₃ where 0 < x < 1 and 0 ≤ y < 1.

13. Multilayer capacitor according to any of Claims 1 to 12, wherein the second material has one of the following compositions:
e) Pb_{1-1.5y}La_{y}Ti₁-_{z}ZrzO₃ where 0 < y < 0.15 and 0.6 < z < 1,
f) Pb_{1-1.5y}Nd_{y}Ti₁-_{z}Zr_{z}O₃ where 0 < y < 0.15 and 0.6 < z < 1,
g) (1-x) PLZT + x PNZT, where 0 < x < 1, wherein PLZT denotes a material of the composition e) and PNZT denotes a material of the composition f),
h) Bi_{0.5}Na_{0.5}TiO₃,
i) (1-x) BNT + x BT where 0 < x < 0.35, wherein BNT denotes a material of the composition h) and BT denotes a material of the composition BaTiO₃,
k) (1-x) BNT + x PT where 0 < x < 0.35, wherein BNT denotes a material of the composition h) and PT denotes a material of the composition PbTiO₃.

14. Multilayer capacitor according to any of Claims 1 to 13, comprising an overvoltage protection (7), which is electrically connected in parallel with the capacitor units (2, 201, 202, 3, 301, 302).

15. Multilayer capacitor according to any of Claims 1 to 14, comprising an inductance, which is electrically connected in series between the first (2, 201, 202) and the second capacitor unit (3, 301, 302).

## Revendications

1. Condensateur multicouche en céramique comprenant une première unité de condensateur (2, 201, 202) qui présente un premier matériau, et comprenant une deuxième unité de condensateur (3, 301, 302) qui présente un deuxième matériau, le premier matériau étant différent du deuxième matériau, la première (2, 201, 202) et la deuxième unité de condensateur (3, 301, 302) étant branchées électriquement en parallèle et le premier matériau présentant un maximum de l'indice diélectrique (K) à une première tension et le deuxième matériau présentant un maximum de l'indice diélectrique (K) à une deuxième tension, la première tension étant inférieure à la deuxième tension.

2. Condensateur multicouche selon la revendication 1, avec lequel l'indice diélectrique (K) du condensateur multicouche (1) dans une plage de tension de 0 V à 700 V est supérieur à 500.

3. Condensateur multicouche selon l'une des revendications 1 ou 2, avec lequel, dans une plage de tension de 0 V à 700 V, la dépendance à la tension de l'indice diélectrique (K) du condensateur multicouche (1), du fait du branchement en parallèle des unités de condensateur (2, 201, 202, 3, 301, 302), est inférieure à la dépendance à la tension de l'indice diélectrique (K) des unités de condensateur (2, 3) individuelles.

4. Condensateur multicouche selon l'une des revendications 1 à 3, avec lequel le premier matériau présente des propriétés ferroélectriques et le deuxième matériau des propriétés anti-ferroélectriques.

5. Condensateur multicouche selon l'une des revendications 1 à 4, comprenant au moins un régulateur de température (4, 401, 402) pour réguler la température d'au moins l'une des unités de condensateur (2, 201, 202, 3, 301, 302) .

6. Condensateur multicouche selon la revendication 5, avec lequel le régulateur de température (4, 401, 402) est réalisé sous la forme d'une résistance à coefficient de température positif.

7. Condensateur multicouche selon l'une des revendications 5 ou 6, avec lequel le régulateur de température (4, 401, 402) est prévu pour le réglage de la température d'au moins l'un des matériaux à une valeur à laquelle l'indice diélectrique (K) du matériau est proche d'un maximum dans la plage de tension utilisée.

8. Condensateur multicouche selon l'une des revendications 5 à 7, comprenant un premier régulateur de température (4, 401, 402) pour le réglage de la température du premier matériau et comprenant un deuxième régulateur de température (4, 401, 402) pour le réglage de la température du deuxième matériau.

9. Condensateur multicouche selon la revendication 8, avec lequel le premier régulateur de température (4, 401, 402) est prévu pour le réglage de la température du premier matériau à une valeur à laquelle l'indice diélectrique (K) du premier matériau est proche d'un maximum dans la plage de tension utilisée et avec lequel le deuxième régulateur de température (4, 401, 402) est prévu pour le réglage de la température du deuxième matériau à une valeur à laquelle l'indice diélectrique (K) du deuxième matériau est proche d'un maximum dans la plage de tension utilisée.

10. Condensateur multicouche selon l'une des revendications 1 à 9, avec lequel le premier matériau est une céramique à base de titanate de baryum ou à base de titanate de plomb.

11. Condensateur multicouche selon l'une des revendications 1 à 10, avec lequel le deuxième matériau est une céramique à base de titanate zirconate de plomb ou à base de bismuth sodium.

12. Condensateur multicouche selon l'une des revendications 1 à 11, avec lequel le premier matériau présente l'une des compositions suivantes :
a) (1-x) BaTiO₃ + x BaZrO₃ avec 0 < x < 0,25,
b) Ba₁₋ₓSrₓTi_{1-y}Zr_{y}O₃ avec 0 < x < 1 et 0 <= y < 1,
c) Pb₁₋ₓSrₓTi_{1-y}Zr_{y}O3 avec 0 < x < 1 et 0 <= y < 1,
d) Ba₁₋ₓCaₓTi_{1-y}Zr_{y}O₃ avec 0 < x < 1 et 0 <= y < 1.

13. Condensateur multicouche selon l'une des revendications 1 à 12, avec lequel le deuxième matériau présente l'une des compositions suivantes :
e) Pb₁₋₁,_{5y}La_{y}Ti_{1-z}Zr_{z}O₃ avec 0 < y < 0,15 et 0,6 < z < 1,
f) Pb_{1-1,5y}Nd_{y}Ti_{1-z}Zr_{z}O₃ avec 0 < y < 0,15 et 0,6 < z < 1,
g) (1-x) PLZT + x PNZT, avec 0 < x < 1, PLZT désignant un matériau de la composition e) et PNZT un matériau de la composition f),
h) Bi_{0,5}Na_{0,5}TiO₃,
i) (1-x) BNT + x BT, avec 0 < x < 0,35, BNT désignant un matériau de la composition h) et BT un matériau de la composition BaTiO₃,
k) (1-x) BNT + x PT, avec 0 < x < 0,35, BNT désignant un matériau de la composition h) et PT un matériau de la composition PbTiO₃.

14. Condensateur multicouche selon l'une des revendications 1 à 13, comprenant une protection contre les surtensions (7) qui est branchée électriquement en parallèle avec les unités de condensateur (2, 201, 202, 3, 301, 302).

15. Condensateur multicouche selon l'une des revendications 1 à 14, comprenant une inductance qui est branchée électriquement en série entre la première (2, 201, 202) et la deuxième unité de condensateur (3, 301, 302).
